# EUROPEAN PATENT APPLICATION

(11) **EP 1 816 109 A1**
(43) Date of publication of application: **08.08.2007**
(21) Application number: 07001927.8
(22) Date of filing: 29.01.2007
(51) Int. Cl.: C03C 17/00

(54) **Infrared shielding film-coated glass plate and process for its production**

(30) Priority: 01.02.2006 JP 2006024506; 21.06.2006 JP 2006171543; 17.10.2006 JP 2006282630
(71) Applicant: Asahi Glass Company, Limited, Chiyoda-ku, Tokyo 100-8405 (JP)
(72) Inventor: Kodaira, Hirokazu, Chiyoda-ku Tokyo 100-8405 (JP); Tomonaga, Hiroyuki, Chiyoda-ku Tokyo 100-8405 (JP); Sunahara, Kazuo, Chiyoda-ku Tokyo 100-8405 (JP)
(74) Representative: Müller-Boré & Partner Patentanwälte

(57) **Abstract**

An infrared shielding film-coated glass plate comprising a glass substrate (10) and an infrared shielding film (20) formed thereon, wherein the infrared shielding film comprises fine ITO particles having an average primary particle diameter of at most 100 nm dispersed in a matrix containing silicon oxide and titanium oxide and has a film thickness of from 100 to 1,500 nm.

## Description

The present invention relates to an infrared shielding film-coated glass plate and a process for its production.

In recent years, an infrared shielding film-coated glass has been employed for the purpose of shielding infrared rays entering into a vehicle or building through a vehicle glass or building glass thereby to reduce the temperature rise in the vehicle or building or to reduce the air conditioning load (e.g. JP-A-10-279329). Further, glass for vehicles or glass for building is required to have a high visible light transmittance to secure safety or visibility, in many cases.

Heretofore, there have been many proposals to impart an infrared shielding property to a glass plate thereby to increase a heat-shielding performance. For example, there has been a proposal to incorporate infrared absorptive ions in glass thereby to impart an infrared shielding property to a glass plate itself, or a proposal to form an electroconductive film on the surface of a glass substrate thereby to impart an infrared shielding property, and such a proposal has been practically employed.

However, with respect to a glass plate having infrared absorptive ions incorporated in glass, it has been difficult to increase the infrared absorptivity while maintaining the visible light transmittance at a high level, and particularly, it has been difficult to increase the shielding performance against intermediate wavelength infrared rays having a wavelength of from 1.5 µm to 2.7 µm. On the other hand, by the method of forming an electroconductive film on the surface of a glass substrate, radiowaves can not transmit through the glass due to the electroconductive film, which tends to bring about an inconvenience as radiowave transmittance through an opening has been required along with the progress in mobile telecommunication in recent years. Thus, it has been very difficult to produce a glass plate having transparency, infrared-shielding property and radiowave transmittance at the same time.

In order to solve the above-mentioned problems, a method has been proposed wherein a glass substrate is coated with a coating film having fine particles of tin oxide-doped indium oxide (ITO) capable of providing a high infrared shielding performance dispersed in a binder, thereby to provide an infrared shielding film-coated glass plate (JP-A-7-70482 and JP-A-8-41441). By this method, an infrared shielding property can be imparted while maintaining a relatively high visible light transmittance, and at the same time, the electrical conductivity as the film will be suppressed by the presence of the binder, whereby it will be possible to impart radiowave transmittance.

However, the binder to be usually used in this system was an organic binder or an inorganic binder, and the organic binder had a problem that the mechanical durability of the coating film thereby obtainable was poor, and the coating film could not be used at a site where mechanical durability was required, such as a door glass for an automobile. On the other hand, as the inorganic binder, a material obtained by a sol/gel method was frequently employed, and even then, in order to produce a coating film excellent in durability so that it was capable of being used at a site where the above-mentioned mechanical durability was required, it was necessary to carry out heat treatment at a relatively high temperature, for example, at a temperature of at least 400°C, preferably at least 500°C.

However, the ITO electric conductor is semiconductor of oxygen-deficient type, and if it is held at a temperature of at least 300°C in the presence of oxygen, free electrons will be lost by oxidation, whereby the infrared shielding property will be lost. Accordingly, in order to produce a coating film excellent in mechanical durability while maintaining the infrared shielding property, it is required to carry out heat treatment in a non-oxidizing atmosphere which is totally disadvantageous from the viewpoint of the costs, or the surface of the coating film having infrared-shielding property has to be further coated with an ITO antioxidant layer. A method has not yet been found whereby a highly durable infrared shielding film-coated glass plate can be produced simply and inexpensively by heat treatment in atmospheric air, particularly by a single film-forming process. Thus, an infrared shielding film-coated glass plate which can be applied to a site where high mechanical durability is required, such as a window glass for an automobile, and a process for its production, have not been found.

In recent years, WO2004/046057 proposes a process of obtaining a heat-shielding film-coated glass plate excellent in visible light transmittance and transparency by a single film-forming process. In the heat-shielding film-coated glass plate, oxidation of the heat-shielding film is prevented by incorporating at least two alkali metal oxides in the heat-shielding film. However, since a film containing an alkali metal oxide has relatively low chemical resistance, it may not be applied to a site to be exposed to severe exterior environment for a long time, such as a door glass plate or window glass plate for an automobile. In recent years, development of an infrared shielding film-coated glass plate having both higher infrared shielding property and radiowave transmittance, and excellent in mechanical and chemical durability, has been desired.

Under these circumstances, it is an object of the present invention to provide an infrared shielding film-coated glass plate which has a high visible light transmittance, a low infrared transmittance and a high radiowave transmittance and which is capable of being applied to a site where mechanical and chemical durability is highly required, such as a window glass plate for an automobile, and a production process to obtain such an infrared shielding film-coated glass plate by a single film-forming process simply and inexpensively in an atmosphere containing oxygen.

The present invention provides an infrared shielding film-coated glass plate comprising a glass substrate and an infrared shielding film formed thereon, wherein the infrared shielding film comprises fine ITO particles having an average primary particle diameter of at most 100 nm dispersed in a matrix containing silicon oxide and titanium oxide and has a film thickness of from 100 to 1,500 nm.

The present invention further provides a process for producing an infrared shielding film-coated glass plate, which comprises a step of applying a dispersion liquid comprising fine ITO particles having an average primary particle diameter of at most 100 nm, a silicon compound capable of forming a silicon oxide gel, a titanium compound capable of forming a titanium oxide gel and an organic solvent, to the surface of a glass substrate and drying the dispersion liquid to form a fine ITO particles-dispersed layer containing the silicon compound and the titanium compound and/or containing a gel thereof, and a step of firing the glass substrate having the above layer formed thereon in an atmosphere containing oxygen at such a temperature that the glass substrate temperature is from 400°C to 750°C.

The infrared shielding film-coated glass plate of the present invention has a high visible light transmittance, a low infrared transmittance, a high radiowave transmittance and excellent mechanical durability and chemical resistance. Further, according to the production process of the present invention, the infrared shielding film-coated glass plate of the present invention can be obtained while carrying out tempering treatment in an atmosphere containing oxygen or high temperature molding processing in an atmosphere containing oxygen, whereby simplification of the process and reduction of the production costs can be attained particularly in production of e.g. a window glass plate for an automobile.

In the accompanying drawing:

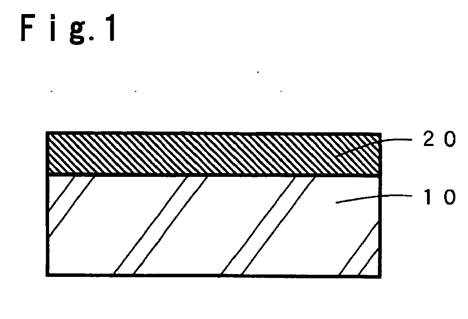

Fig. 1 is a cross section illustrating an infrared shielding film-coated glass plate according to one embodiment of the present invention.

Now, the constituting elements of the present invention will be described in detail.

In the infrared shielding film (numerical reference 20 in Fig. 1) of the present invention, the fine ITO particles having an average primary particle diameter of at most 100 nm, are a constituting element to provide the infrared shielding property, and it is important that the average primary particle diameter is at most 100 nm. If the particle diameter is larger than this level, such tends to cause a haze due to scattering when formed into a film on a glass substrate, such being undesirable. The particle diameter is more preferably from 5 to 65 nm with a view to maintaining the transparency.

The mixing ratio of tin oxide to indium oxide in the fine ITO particles to provide the infrared shielding property, is required to be In/Sn = 2 to 20, particularly preferably In/Sn = 3 to 10, when represented by the ratio of the atomicity of indium to the atomicity of tin (In/Sn).

The matrix containing silicon oxide and titanium oxide serves as a binder for the above fine ITO particles to increase the film hardness and serves to impart the adhesion of the infrared shielding film to the glass substrate. Further, titanium oxide is considered to be selectively adsorbed on the surface of the fine ITO particles to serve to reduce shrinkage of the film at the time of firing described hereinafter, thus suppressing warpage of the glass plate or cracking in the film at the time of firing.

The fine ITO particles themselves are excellent in electrical conductivity, and accordingly, if the fine ITO particles are continuously in close contact with one another in the coating film, the coating film itself will show electrical conductivity and thus will adversely affect the radiowave transmittance. The matrix containing titanium oxide and silicon oxide is effective to limit the contact of the fine ITO particles and thereby to prevent the coating film itself from becoming an electroconductive film, and thus, it is an important constituting element to provide the radiowave transmittance of the coating film. Here, silicon oxide and titanium oxide are not required to be SiO₂ and TiO₂ in a strict sense, and they may be a matrix material comprising Si-O-Si bonds, Ti-O-Ti bonds or Si-O-Ti bonds. The matrix material preferably forms a homogenous composite metal oxide containing silicon atoms, titanium atoms and oxygen atoms as main constituting atoms. Further, some of titanium oxide may be unevenly present on the surface of the fine ITO particles. Further, the matrix material may contain nitrogen atoms bonded to Si or Ti. Namely, some of silicon oxide or titanium oxide in the matrix material may be silicon oxynitride or titanium oxynitride. However, after firing described hereinafter is carried out, the amount of nitrogen atoms is preferably small (for example, at most about 5% by mass ratio) relative to oxygen atoms and is preferably an amount to such an extent that the nitrogen atoms are contained as impurities, rather than intentionally incorporated. Further, in the matrix material, constituting elements other than Si, Ti, O and N may be contained as components contained in a small amount with limits of about 5% by mass ratio, such as C, Sn, Zr, Al, B, P, Nb and Ta.

The mass ratio of the fine ITO particles to the matrix in the infrared shielding film is preferably (fine ITO particles)/(matrix)= 20/80 to 50/50. By the ratio being at most 50/50, the adhesion or hardness of the coating film will be kept, and the radiowave transmittance is likely to be maintained. Further, by the ratio being at least 20/80, the infrared shielding property will sufficiently be developed. More preferably, the mass ratio of (fine ITO particles)/(matrix)= 20/80 to 40/60.

Further, the mass ratio of silicon oxide to titanium oxide in the infrared shielding film is preferably (SiO₂)/(TiO₂)= 45/55 to 85/15. By the ratio being at least 45/55, sufficient adhesion to a glass plate will be obtained. Further, by the above ratio being at most 85/15, an effect of suppressing warpage or cracking of a glass plate by shrinkage at the time of firing will sufficiently be obtained, and further, a function as an oxygen barrier film to prevent the fine ITO particles from being supplied with oxygen and thereby oxidized. The reason is not necessarily clear, but is considered that titanium oxide functions as a reducing agent to suppress oxidation of ITO when the ratio of titanium oxide in the matrix is relatively high. More preferably, the ratio is preferably within a range of (SiO₂)/(TiO₂) = 50/50 to 80/20.

The thickness of the infrared shielding film of the present invention is from 100 to 1,500 nm. If the thickness is less than 100 nm, it tends to be difficult to sufficiently develop the infrared shielding property, and if it exceeds 1,500 nm, cracking is likely to result during the formation of the coating film, or the visible light transmittance tends to be low. The thickness is preferably from 250 to 1,000 nm, whereby an infrared shielding film having stable infrared shielding property and also excellent in the visible light transmittance, is likely to be obtained. The thickness is particularly preferably from 300 to 900 nm.

The infrared shielding film-coated glass plate of the present invention is so constituted that the infrared shielding film is adjacent to the glass plate.

Further, when it is used as a window glass plate for an automobile, it is required to have a high visible light transmittance in some cases depending upon the site, and for such a case, the visible light transmittance is preferably at least 70% as the infrared shielding film-coated glass plate. The visible light transmittance means a visible light transmittance determined by the calculating formula as stipulated in JIS R3212 (1998).

The glass substrate (numerical reference 10 in Fig. 1) to be used in the present invention is not particularly limited, and a glass plate made of an inorganic glass material or a glass plate made of an organic glass material may, for example, be mentioned. For a window of an automobile particularly a windshield or a sliding window, it is preferred to use a glass plate made of an inorganic glass material. The inorganic glass material may be a common glass material such as soda lime glass, borosilicate glass, alkali-free glass or quartz glass.

As the inorganic glass material, glass which absorbs ultraviolet rays and infrared rays may also be used. Specifically, it is particularly effective to employ, as the glass substrate, a glass plate made of an inorganic glass material, of which the visible light transmittance as stipulated in JIS R3212 (1998) is at least 70%, the transmittance to a light having a wavelength of 1.0 µm is at most 30%, and the transmittance to a light having a wavelength of 2.0 µm is from 40 to 70%. With the infrared shielding film in the present invention, the shielding property in a near infrared region in the vicinity of 1.0 µm is not so high, and by using a glass plate having a high shielding performance against light having a wavelength in the vicinity of 1.0 µm as a glass substrate, it is possible to provide an excellent infrared shielding property over the entire infrared region.

The infrared shielding film-coated glass plate of the present invention can be produced as follows. Namely,
1) A dispersion liquid comprising fine ITO particles having an average primary particle diameter of at most 100 nm, a silicon compound capable of forming a silicon oxide gel (hereinafter sometimes referred to simply as a silicon compound), a titanium compound capable of forming a titanium oxide gel (hereinafter sometimes referred to simply as a titanium compound) and an organic solvent is applied to the surface of a glass substrate and dried to form a fine ITO particles-dispersed layer containing the silicon compound and the titanium compound and/or containing a gel thereof, and
2) The glass substrate having the above layer formed thereon is fired in an atmosphere containing oxygen at a glass substrate temperature of from 400 to 750°C.

The agglomerated state of the fine ITO particles in the fine ITO particles-dispersed layer after firing, reflects the agglomerated state in the dispersion liquid. Accordingly, in order to maintain the transparency or radiowave transmittance in the coating film, the fine ITO particles are required to be highly dispersed in the dispersion liquid. As such a dispersed state, preferred is a monodispersed state with a number average agglomerated particle diameter of preferably at most 500 nm, more preferably at most 200 nm, further preferably at most 100 nm. The organic solvent as a dispersant is not particularly limited so long as it can dissolve the silicon compound and the titanium compound therein. Specifically, it may, for example, be an aliphatic hydrocarbon, an aromatic hydrocarbon, a ketone, an ester, an ether or a halogenated hydrocarbon. Needless to say, such organic solvents may be used alone or as mixed. As the method for dispersion, a known method may be employed. For example, ultrasonic wave irradiation, a homogenizer, a media mill such as a ball mill, a bead mill, a sand mill or a paint shaker, or a high pressure impact mill such as a jet mill or a nanomizer, may be employed.

The fine ITO particles in the dispersion liquid may be known particles. Regarding the crystal system, by employing the matrix material of the present invention, not only common cubic ITO but also hexagonal ITO which is generally considered to be inferior in the infrared shielding property, can be used. Particularly, in the present invention, it is preferred to use ITO, of which the powder color in the xy chromaticity coordinates obtained by a 2-degree visual field with illuminant C in accordance with JIS Z8701 (1999), is such that value x is at least 0.3 and value y is at least 0.33. Fine ITO particles having such a powder color themselves have low electrical conductivity and have no high infrared shielding property. That is, the number of oxygen deficiencies in the interior of the ITO lattice is small. Such fine ITO particles have such advantages that they can be prepared only by firing a precursor powder obtained by e.g. a coprecipitation method in atmospheric air or in a general inert gas such as nitrogen, and are thereby prepared safely at a lower cost, since no conventional dangerous firing in a reducing atmosphere such as hydrogen or in a pressurized inert atmosphere, which has been required for preparation of fine ITO particles having a high infrared shielding property, is required. The process for producing an infrared shielding film-coated glass plate of the present invention, capable of producing a sufficient infrared shielding film-coated glass plate even by using the above inexpensive fine ITO particles having a low infrared shielding performance, is excellent also in view of productivity.

The silicon compound capable of forming a silicon oxide gel is a component (hereinafter sometimes referred to as a siloxane matrix material) which is capable of becoming a silicon oxide matrix having siloxane bonds to be silicon oxide by heating. The siloxane matrix material is a compound wherein siloxane bonds (Si-O-Si) will be formed by heating to form a three dimensional network and which thus is capable of becoming a hard transparent silicon oxide matrix. Specifically, an alkoxysilane to be used in a sol/gel method, a partial hydrolysate of the alkoxysilane, a partially hydrolyzed condensate of the alkoxysilane, water glass or a polysilazane may, for example, be mentioned. Further, a silicone oil or a silicone resin to be a silicon oxide matrix at a temperature in the firing step described hereinafter, may also be used. Among them, preferred are a polysilazane, a tetraalkoxysilane, a partial hydrolysate of the tetraalkoxysilane and a partially hydrolyzed condensate of the tetraalkoxysilane, and particularly preferred is a polysilazane.

The polysilazane is a generic name for linear or cyclic compounds having a structure represented by -SiR¹₂-NR²-SiR¹₂- (wherein R¹ and R² each independently are hydrogen or a hydrocarbon group, and the plurality of R¹ may be different), and is a material which forms a Si-O-Si network by decomposition of the Si-NR²-Si bonds by heating or by reaction with moisture. A silicon oxide type coating film obtainable from a polysilazane has high mechanical durability and gas barrier properties as compared with a silicon oxide type coating film obtainable from a tetraalkoxysilane or the like. Silicon oxide obtainable from a polysilazane sometimes contains a small amount of nitrogen atoms, and silicon oxynitride is considered to be partially formed. The silicon oxide in the present invention may be such a silicon oxide containing nitrogen atoms. Further, the mass ratios (such as the mass ratio (SiO₂)/(TiO₂)) with respect to such a silicon oxide containing nitrogen atoms are values calculated assuming that all silicon atoms are silicon atoms in silicon oxide (values calculated as silicon oxide).

In the present invention, the polysilazane is preferably a perhydropolysilazane of the above formula wherein R¹ = R² = H, a partially organic polysilazane wherein R¹ is a hydrocarbon group such as a methyl group and R² = H, a partially organic polysilazane wherein some of R¹ is a hydrocarbon group such as a methyl group, the other R¹ is a hydrogen atom, and R² = H, or a mixture thereof. An infrared shielding film formed by using such a polysilazane has high oxygen barrier properties and is very suitable. The amount of the polysilazane in the dispersion liquid is preferably at most 20% by mass ratio based on the whole dispersion liquid.

The alkoxysilane is preferably an alkoxysilane represented by the formula RₐSiX₄₋ₐ (wherein X is an alkoxysilane having at most 4 carbon atoms, R is an alkyl group having at most 6 carbon atoms, an alkenyl group having at most 6 carbon atoms or an aryl group having at most 6 carbon atoms, and a is an integer of from 0 to 2). The alkoxy group is preferably a methoxy group or an ethoxy group, the alkyl group is preferably a methyl group or an ethyl group, the alkenyl group is preferably a vinyl group, and the aryl group is preferably a phenyl group. Specifically, tetramethoxysilane, tetraethoxysilane, methyltrimethoxysilane, methyltriethoxysilane, dimethyldimethoxysilane, dimethyldiethoxysilane, phenyltrimethoxysilane or diphenyldimethoxysilane may, for example, be mentioned.

The dispersion liquid of the present invention containing a polysilazane as the silicon compound may contain another siloxane matrix material as the case requires. Such another siloxane matrix material may be the above silicon compound other than the polysilazane, and among them, an alkoxysilane or a partial hydrolysate thereof or a partially hydrolyzed condensate thereof, a silicone oil or a silicone resin is preferably used.

Further, the silicon compound to be used in combination with the polysilazane, is preferably a silicon compound containing a Si-C bond, whereby an infrared shielding film-coated glass plate excellent in optical characteristics will easily be obtained. The reason is not necessarily clear, but is considered that the use of a silicon compound containing a Si-C bond prevents the crosslinked structure in the infrared shielding film from becoming dense at the time of the firing step described hereinafter, and sufficiently removes chelate ligands, etc. contained in the titanium compound. The silicon compound containing a Si-C bond may be an alkoxysilane of the above formula wherein a is 1 or 2, a silicone oil such as dimethyl silicone oil or methylphenyl silicone oil, or a silicone resin such as dimethyl silicone resin or methylphenyl silicone resin. The alkoxysilane wherein a is 1 or 2 may, for example, be methyltrimethoxysilane, methyltriethoxysilane, dimethyldimethoxysilane, dimethyldiethoxysilane, phenyltrimethoxysilane or diphenyldimethoxysilane.

As the silicon compound containing a Si-C bond, it is particularly preferred to use phenyltrimethoxysilane, diphenyldimethoxysilane or methylphenyl silicone oil. The reason is considered that one having a bulky substituent tends to have larger steric hindrance and tends to have an improved effect of removing the chelate ligands, etc. The methylphenyl silicone oil is preferably a methylphenyl silicone oil having a ratio (mol%) of phenyl groups of from 5 to 50% based on the total number of methyl groups and phenyl groups.

The amount of the silicon compound other than the polysilazane is preferably at most 50 mass% based on the entire silicon compounds including the polysilazane.

Further, the dispersion liquid of the present invention contains a titanium compound capable of forming a titanium oxide gel. Such a titanium compound is preferably an organic titanium compound. The organic titanium compound has a high effect of suppressing cracking in the film at the time of shrinkage by crosslinking of the polysilazane in the firing step described hereinafter, and accordingly by addition of an organic titanium compound, excellent oxygen barrier properties and mechanical durability will be developed, and a thicker coating film can be formed. Such an organic titanium compound may, for example, be a titanium tetraalkoxide compound, a titanium chelate compound, a titanium acylate compound or a titanate coupling agent, and the titanium compound in the present invention is preferably a titanium tetraalkoxide compound or a titanium chelate compound. The titanium tetraalkoxide compound is preferably a compound of the formula Ti(OR')₄ (wherein R' is a C₁₋₈ hydrocarbon group), and specifically, it may, for example, be titanium tetra-n-butoxide, titanium tetraisopropoxide, titanium tetramethoxide, titanium tetraethoxide or tetrakis(2-ethylhexyloxy)titanium. The titanium chelate compound is preferably a chelate compound of a titanium alkoxide, and specifically, it may, for example, be diisopropoxybis(ethylacetoacetate)titanium, di-n-butoxybis(ethylacetoacetate)titanium, diisopropoxybis(acetylacetonato)titanium, di-n-butoxybis (acetylacetonato) titanium or titanium tetraacetylacetonate. From the viewpoint of handling efficiency, the titanium compound in the present invention is preferably a titanium chelate compound, and from the viewpoint of the stability of the dispersion liquid, diisopropoxybis(ethylacetoacetate)titanium or titanium tetraacetylacetonate is particularly preferred. The titanium compound may be added after preparation of the dispersion liquid, or may be added during preparation of the dispersion liquid.

The dispersion liquid thus obtained is applied to the surface of a glass substrate and dried to prepare a fine ITO particles-dispersed layer. The application method is not particularly limited, and a known method such as a dip coating method, a spin coating method, a spray coating method, a flexographic printing method, a screen printing method, a gravure printing method, a roll coating method, a meniscus coating method or a die coating method may, for example, be used. The drying temperature is preferably less than 400°C. In the drying step, it is the main purpose to remove the solvent component, etc. in the layer, and even when the temperature is raised higher than this, no improvement in the effect can be expected. The drying time is preferably from about 30 seconds to about 2 hours. The drying may be carried out either in atmospheric air or in a non-oxidizing atmosphere. However, no particular advantage in the non-oxidizing atmosphere can be expected. In the drying step, it is possible to raise the heating temperature stepwise to 200°C, 300°C and 350°C, for example.

Further, it is possible to carry out this drying step under reduced pressure. The ultimate vacuum is from about 10 kN/m² to about 0.10 kN/m², and.the treatment time is from 10 seconds to 30 minutes.

After formation of the fine ITO particles-dispersed layer on the glass plate as described above, firing is carried out at such a temperature that the temperature of the glass plate will be at least 400°C to cure the coating film thereby to form an infrared shielding film. The firing time is usually from about 30 seconds to about 10 hours. With respect to the atmosphere, this firing can be carried out usually in an atmosphere containing oxygen, such as in atmospheric air, such being economical. Particularly when a tempered glass to be used as a window glass for an automobile is to be prepared, tempering treatment may be carried out by raising the temperature to a level close to from 600 to 700°C in atmospheric air, followed by molding and in some cases, cooling in air. When the infrared shielding film of the present invention is employed, no deterioration of the infrared shielding property will be observed even when firing is carried out for the tempering treatment. Accordingly, firing is possible by utilizing the heat of high temperature in this tempering step, whereby tempered glass for an automobile or for building, provided with an infrared shielding film having high durability can be efficiently and economically produced. Further, as described above, the dispersion liquid is a dispersion liquid containing a titanium compound and suitable particularly for formation of an infrared shielding film by heat treatment at a high temperature (cracking by shrinkage of the film is less likely to occur even when heated at a high temperature), and accordingly its characteristics are likely to be exhibited when the heat treatment temperature is such as temperature that the glass plate temperature is from 400 to 750°C. Such heat treatment at high temperature is referred to as firing in the present invention. The firing temperature is particularly preferably such a temperature that the glass plate temperature is from 600 to 750°C. A denser infrared shielding film will be obtained by firing.

Now, the present invention will be described in further detail with reference to Examples. However, it should be understood that the present invention is by no means restricted to such specific Examples. Further, the average particle diameter of the fine ITO particles in the obtained infrared shielding film was determined by observation by a transmission electron microscope (TEM), and the obtained infrared shielding film-coated glass plate was evaluated as follows. (Evaluation)
1) Film thickness: The cross section of the film was observed by a scanning electron microscope (S-800, manufactured by Hitachi, Ltd.), and from the obtained observation image, the thickness (nm) was obtained.
2) Film composition: The composition distribution (mass ratio as calculated as oxide) of the infrared shielding film after firing in the depth direction was measured with respect to In, Si and Ti by X-ray photoelectron spectrospopy (XPS).
3) Cracking: The infrared shielding film after firing was observed visually and by a metallurgical microscope, and rated whether cracking resulted in the film, on the basis of the following standards. ○: no cracking resulted, Δ: cracking not visually observed but observed by a microscope, and ×: cracking visually observed.
4) Visible light transmittance (Tv): The transmittance of the infrared shielding film-coated glass of from 380 to 780 nm was measured by a spectrophotometer (U-3500, manufactured by Hitachi, Ltd.), and the visible light transmittance (%) was calculated in accordance with JIS R3212 (1998).
5) Solar energy transmittance (Te): The transmittance of the infrared shielding film-coated glass of from 300 to 2,100 nm was measured by a spectrophotometer (U-3500, manufactured by Hitachi, Ltd.), and the solar energy transmittance (%) was calculated in accordance with JIS R3106 (1998). Further, the infrared shielding performance in the present invention was represented by the performance of the solar energy transmittance.
6) Abrasion resistance: Using a Taber type abrasion resistance tester, a 1,000 rotation abrasion test was carried out by a CS-10F abrasion wheel in accordance with the method disclosed in JIS R3212 (1998), and the degree of scratches before and after the test was measured by the haze (haze value), and the abrasion resistance was evaluated by the increase (%) in haze.
7) Chemical resistance: A sulfuric acid solution of 0.05 mol/liter and a sodium hydroxide solution of 0.1 mol/liter were dropped on the coated film and left to stand at 25°C for 14 hours, whereupon they were washed with water, and the changes in the appearance and properties as between before and after the test were monitored. The coated film of which the appearance and properties did not changed was rated as passed.

### EXAMPLE 1

0.43 g of a xylene dispersion liquid A containing 30 mass% of fine ITO particles, of which the powder color in the xy chromaticity coordinates with illuminant C in a visual field of 2° was (x, y) = (0.353, 0.374) and which has a primary particle diameter of 55 nm, 0.90 g of a xylene solution B containing 20 mass% of a partially organic polysilazane of the formula -SiR¹₂-NR²-SiR¹₂- wherein R¹ = H and a methyl group, and R² = H (Aquamica NN-310, trade name, manufactured by AZ Electronic Materials) and 0.67 g of diisopropoxybis(ethylacetoacetate)titanium (TC-750, trade name, manufactured by Matsumoto Chemical Industry Co., Ltd.) were weighed, and they were mixed at room temperature and stirred for 10 minutes to obtain a dispersion liquid C.

The obtained dispersion liquid C was applied by a spin coating method to a highly heat absorptive green glass (Tv: 72.8%, Te: 45.2%, transmittance to a light having a wavelength of 2.0 µm: 47.1%, 10 cm in length, 10 cm in width, 3.5 cm in thickness, common name UVFL, manufactured by Asahi Glass Company, Limited) the surface of which was cleaned, and dried in atmospheric air at 155°C for 10 minutes and then fired in an electronic furnace in an atmosphere of atmospheric air maintained at 755°C until the glass substrate temperature became 700°C, to obtain an infrared shielding film-coated glass plate. The firing time was about 3 minutes.

The properties of the obtained infrared shielding film-coated glass plate are shown in Table 1. The composition of the infrared shielding film was analyzed by secondary ion mass spectrometry and as a result, it was found that the composition was oxynitride containing a very small amount of nitrogen, and the main component was silicon oxide containing TiO₂.

Further, the increase in haze measured by the above method was so low as 1.8%.

### EXAMPLE 2

0.52 g of the above dispersion liquid A, 1.51 g of the above solution B and 0.91 g of the above diisopropoxybis(ethylacetoacetate)titanium were weighed, and they were mixed at room temperature and stirred for 10 minutes to obtain a dispersion liquid D.

An infrared shielding film-coated glass plate was prepared in the same manner as in Example 1 except that the above dispersion liquid D was used instead of the dispersion liquid C and that the thickness of the infrared shielding film after firing was changed as shown in Table 1. The results of evaluation of the properties of the obtained infrared shielding film-coated glass plate are shown in Table 1.

### EXAMPLE 3

0.48 g of the above dispersion liquid A, 1.51 g of the above solution B and 0.99 g of the above diisopropoxybis(ethylacetoacetate)titanium were weighed, and they were mixed at room temperature and stirred for 10 minutes to obtain a dispersion liquid E.

An infrared shielding film-coated glass plate was prepared in the same manner as in Example 1 except that the above dispersion liquid E was used instead of the dispersion liquid C and that the thickness of the infrared shielding film after firing was changed as shown in Table 1. The results of evaluation of the properties of the obtained infrared shielding film-coated glass plate are shown in Table 1.

### EXAMPLE 4

0.62 g of the above dispersion liquid A, 1.41 g of the above solution B and 0.85 g of the above diisopropoxybis(ethylacetoacetate)titanium were weighed, and they were mixed at room temperature and stirred for 10 minutes to obtain a dispersion liquid F.

An infrared shielding film-coated glass plate was prepared in the same manner as in Example 1 except that the above dispersion liquid F was used instead of the dispersion liquid C and that the thickness of the infrared shielding film after firing was changed as shown in Table 1. The results of evaluation of the properties of the obtained infrared shielding film-coated glass plate are shown in Table 1.

### EXAMPLE 5

An infrared shielding film-coated glass plate was prepared in the same manner as in Example 4 except that the thickness of the infrared shielding film after firing was changed as shown in Table 1. The results of evaluation of the properties of the obtained infrared shielding film-coated glass plate are shown in Table 1.

### EXAMPLE 6

0.83 g of the above dispersion liquid A, 0.93 g of the above solution B and 1.04 g of the above diisopropoxybis(ethylacetoacetate)titanium were weighed, and they were mixed at room temperature and stirred for 10 minutes to obtain a dispersion liquid G.

An infrared shielding film-coated glass plate was prepared in the same manner as in Example 1 except that the above dispersion liquid G was used instead of the dispersion liquid C and that the thickness of the infrared shielding film after firing was changed as shown in Table 1. The results of evaluation of the properties of the obtained infrared shielding film-coated glass plate are shown in Table 1.

### EXAMPLE 7

0.62 g of the above dispersion liquid A, 1.52 g of the above solution B and 0.73 g of the above diisopropoxybis(ethylacetoacetate)titanium were weighed, and they were mixed at room temperature and stirred for 10 minutes to obtain a dispersion liquid H.

An infrared shielding film-coated glass plate was prepared in the same manner as in Example 1 except that the above dispersion liquid H was used instead of the dispersion liquid C and that the thickness of the infrared shielding film after firing was changed as shown in Table 1. The results of evaluation of the properties of the obtained infrared shielding film-coated glass plate are shown in Table 1.

### EXAMPLE 8 (Comparative Example)

An infrared shielding film-coated glass plate was prepared in the same manner as in Example 7 except that the thickness of the infrared shielding film after firing was changed as shown in Table 1. The results of evaluation of the properties of the obtained infrared shielding film-coated glass plate are shown in Table 1.

From the results shown in Table 1, it is understood that cracking resulted in the infrared shielding film in Example 8 having a thickness exceeding 1,500 nm, and the solar energy transmittance slightly decreased.

### EXAMPLE 9 (Comparative Example)

0.62 g of the above dispersion liquid A and 2.17 g of the above solution B were weighed, and they were mixed at room temperature and stirred for 10 minutes to obtain a dispersion liquid I.

An infrared shielding film-coated glass plate was prepared in the same manner as in Example 1 except that the above dispersion liquid I was used instead of the dispersion liquid C and that the thickness of the infrared shielding film after firing was changed as shown in Table 1. The results of evaluation of the properties of the obtained infrared shielding film-coated glass plate are shown in Table 1.

In Example 7 wherein no titanium was contained in the infrared shielding film, the infrared shielding film became dense and blackened by firing. The reason is considered to be because the dispersant contained in the dispersion liquid A did not volatize by firing but was carbonized. Resultingly, in Example 9, the visible light transmittance and the solar energy transmittance greatly decreased, and remarkable oxidation of ITO was confirmed.

**TABLE 1**

| | Film thickness | Composition of film ITO/SiO₂/TiO₂ | Cracking | Tv | Te |
|---|---|---|---|---|---|
| Ex. 1 | 650 | 30/42/28 | ○ | 70.3 | 41.0 |
| Ex. 2 | 850 | 25/49/26 | ○ | 70.2 | 40.6 |
| Ex. 3 | 1,000 | 23/49/28 | Δ | 70.2 | 40.8 |
| Ex. 4 | 683 | 30/45/25 | ○ | 70.4 | 40.8 |
| Ex. 5 | 635 | 30/45/25 | ○ | 71.1 | 41.1 |
| Ex. 6 | 627 | 40/30/30 | ○ | 70.7 | 42.1 |
| Ex. 7 | 544 | 30/49/21 | ○ | 71.6 | 41.9 |
| Ex. 8 | 1,600 | 30/49/21 | × | 70.4 | 40.4 |
| Ex. 9 | 719 | 30/70/0 | × | 19.7 | 23.5 |

With respect to the result of the chemical resistance test, all the coating films in Examples 1 to 9 were passed. Accordingly, it is found that infrared shielding film-coated glass plates very excellent in chemical durability were obtained.

### EXAMPLE 10

0.77 g of the above dispersion liquid A, 1.97 g of the above solution B and 0.83 g of the above diisopropoxybis(ethylacetoacetate)titanium were weighed, and they were mixed at room temperature and stirred for 10 minutes to obtain a dispersion liquid J.

The obtained dispersion liquid J was applied by a spin coating method to the same highly heat absorptive green glass as in Example 1 and dried in atmospheric air at 155°C for 10 minutes. The glass was further fired in an electric furnace in an atmosphere of atmospheric air maintained at 755°C until the glass plate temperature became 700°C, to obtain an infrared shielding film-coated glass plate. The firing time was about 3 minutes. The results of evaluation of the properties of the obtained infrared shielding film-coated glass plate are shown in Table 2.

### EXAMPLE 11

0.48 g of the above dispersion liquid A, 1.01 g of the above solution B, 0.43 g of the above diisopropoxybis(ethylacetoacetate)titanium and 0.19 g of phenyltrimethoxysilane were weighed, and they were mixed at room temperature and stirred for 10 minutes to obtain a dispersion liquid K.

An infrared shielding film-coated glass plate was prepared in the same manner as in Example 10 except that the above dispersion liquid K was used instead of the dispersion liquid J. The results of evaluation of the properties of the obtained infrared shielding film-coated glass plate are shown in Table 2.

**TABLE 2**

| | Film thickness | Composition of film ITO/SiO₂/TiO₂ | Cracking | Tv | Te |
|---|---|---|---|---|---|
| Ex. 10 | 500 | 30/51/19 | ○ | 72.1 | 41.5 |
| Ex. 11 | 500 | 30/54/16 | ○ | 71.7 | 41.5 |

With respect to the result of the chemical resistance test, both the coating films in Examples 10 and 11 were passed. Thus, it is found that infrared shielding film-coated glass plates very excellent also in chemical durability were obtained.

### EXAMPLE 12

0.50 g of the above dispersion liquid A, 0.85 g of the above solution B, 0.28 g of titanium tetraacetylacetonate (one obtained by volatilizing isopropyl alcohol from an isopropyl alcohol solution containing 65 mass% of titanium tetraacetylacetonate (TC-401, trade name, manufactured by Matsumoto Chemical Industry Co., Ltd.) by an evaporator) and 0.08 g of methylphenyl silicone oil (TSF437, trade name, manufactured by GE Toshiba Silicones, number of moles of phenyl groups/number of moles of methyl groups = 27/73 = 0.37) were weighed, and they were mixed at room temperature and stirred for 10 minutes to obtain a dispersion liquid L.

The obtained dispersion liquid L was applied by a spin coating method to the same highly heat absorptive green glass as in Example 1 and dried in atmospheric air at 155°C for 10 minutes. The glass was further fired in an electric furnace in an atmosphere of atmospheric air maintained at 755°C until the glass plate temperature became 700°C, to obtain an infrared shielding film-coated glass plate. The firing time was about 3 minutes. The results of evaluation of the properties of the obtained infrared shielding film-coated glass plate are shown in Table 3.

**TABLE 3**

| | Film thickness | Composition of film ITO/SiO₂/TiO₂ | Cracking | Tv | Te |
|---|---|---|---|---|---|
| Ex. 12 | 400 | 31/53/16 | ○ | 71.5 | 41.2 |

With respect to the result of the chemical resistance test, the coating film in Example 12 was also passed. Thus, it is found that an infrared shielding film-coated glass plate very excellent also in chemical durability was obtained.

The infrared shielding film-coated glass plate of the present invention has excellent infrared shielding property and visible light transmittance, and is applicable to a site where mechanical and chemical durability is highly required, such as a door glass plate for an automobile. Further, according to the production process of the present invention, an infrared shielding film-coated glass plate having both excellent infrared shielding property and visible light transmittance can be produced by a single film-forming process at a low cost, and thus it is suitable particularly for preparation of a glass plate for an automobile, a glass plate for building, etc.

The entire disclosures of Japanese Patent Application No. 2006-024506 filed on February 1, 2006, Japanese Patent Application No. 2006-110972 filed on April 13, 2006, Japanese Patent Application No. 2006-171543 filed on June 21, 2006, and Japanese Patent Application No. 2006-282630 filed on October 17, 2006 including specifications, claims, drawings and summaries are incorporated herein by reference in their entireties.

## Claims

1. An infrared shielding film-coated glass plate comprising a glass substrate and an infrared shielding film formed thereon, wherein the infrared shielding film comprises fine ITO particles having an average primary particle diameter of at most 100 nm dispersed in a matrix containing silicon oxide and titanium oxide and has a film thickness of from 100 to 1,500 nm.

2. The infrared shielding film-coated glass plate according to Claim 1, wherein the mass ratio of the fine ITO particles to the matrix in the infrared shielding film is (fine ITO particles)/(matrix)= 20/80 to 50/50.

3. The infrared shielding film-coated glass plate according to Claim 1 or 2, wherein the mass ratio of silicon oxide to titanium oxide in the infrared shielding film is (SiO₂)/(TiO₂) = 45/55 to 85/15.

4. The infrared shielding film-coated glass plate according to any one of Claims 1 to 3, which has a visible light transmittance of at least 70% as stipulated in JIS R3212 (1998).

5. A process for producing an infrared shielding film-coated glass plate, which comprises:
a step of applying a dispersion liquid comprising fine ITO particles having an average primary particle diameter of at most 100 nm, a silicon compound capable of forming a silicone oxide gel, a titanium compound capable of forming a titanium oxide gel and an organic solvent, to the surface of a glass substrate and drying the dispersion liquid to form a fine ITO particles-dispersed layer containing the silicon compound and the titanium compound and/or containing a gel thereof, and
a step of firing the glass substrate having the above layer formed thereon in an atmosphere containing oxygen at such a temperature that the glass substrate temperature is from 400°C to 750°C.

6. The process for producing an infrared shielding film-coated glass plate according to Claim 5, wherein the silicon compound is a polysilazane.

7. The process for producing an infrared shielding film-coated glass plate according to Claim 6, wherein as the silicon compound, an alkoxysilane, a partial hydrolysate thereof or a partially hydrolyzed condensate thereof, is further used.

8. The process for producing an infrared shielding film-coated glass plate according to any one of Claims 5 to 7, wherein the titanium compound is a titanium tetraalkoxide compound or a titanium chelate compound.
